# EUROPEAN PATENT APPLICATION

(11) **EP 4 734 557 A1**
(43) Date of publication of application: **29.04.2026**
(21) Application number: 24842018.4
(22) Date of filing: 30.04.2024
(51) Int. Cl.: H04W 4/02, H04W 64/00

(54) **POSITIONING METHOD, APPARATUS AND SYSTEM, AND STORAGE MEDIUM**

(30) Priority: 14.07.2023 CN 202310872654
(71) Applicant: Huawei Technologies Co., Ltd., Shenzhen, Guangdong 518129 (CN)
(72) Inventor: PENG, Lan, Shenzhen, Guangdong 518129 (CN); WANG, Qi, Shenzhen, Guangdong 518129 (CN); DU, Zhenguo, Shenzhen, Guangdong 518129 (CN); WU, Yaogang, Shenzhen, Guangdong 518129 (CN); YANG, Yu, Shenzhen, Guangdong 518129 (CN)
(74) Representative: Thun, Clemens
(86) International application number: PCT/CN2024/090987
(87) International publication number: WO 2025/016018

(57) **Abstract**

Embodiments of this application provide a positioning method, apparatus, and system, and a storage medium. The method may be applied to a first apparatus, and the first apparatus may be implemented as an electronic device or deployed in an electronic device. The method includes: The first apparatus obtains a first query request, where the first query request is at least used for requesting to query position information of a second apparatus; and the first apparatus determines, in response to the first query request, a target apparatus as a to-be-positioned object depending on whether the second apparatus is accommodated in a third apparatus and battery level information of an apparatus (including the second apparatus and/or the third apparatus), and then positions the target apparatus to accurately determine the position information of the second apparatus, providing an effective solution of how to determine the accurate position information of the second apparatus.

## Description

This application claims priority to Chinese Patent Application No. 202310872654.2, filed with the China National Intellectual Property Administration on July 14, 2023 and entitled "POSITIONING METHOD, APPARATUS, AND SYSTEM, AND STORAGE MEDIUM", which is incorporated herein by reference in its entirety.

### TECHNICAL FIELD

This application relates to the field of computer technologies, and in particular, to a positioning method, apparatus, and system, and a storage medium.

### BACKGROUND

In an application scenario of an inter-device interaction technology, one of devices is used to position (or search for) another device through interaction between the devices, for example, a mobile phone A is used to search for a mobile phone B.

Currently, when a to-be-searched device is a multi-component product (including, for example, earphones and a charging case that can accommodate the earphones), some devices (for example, the earphones) in the multi-component product cannot be accurately positioned due to a limitation of device performance or a limitation of a device position, for example, the earphones cannot be accurately positioned as no positioning chip is deployed on the earphones, or the earphones are placed in the charging case.

### SUMMARY

This application provides a positioning method, apparatus, and system, and a storage medium, and provides a positioning solution for a device that cannot be accurately positioned due to limited device performance or a limited device position, to implement accurate positioning.

According to a first aspect, an embodiment of this application provides a positioning method. The method may be performed by a first apparatus. The first apparatus may be an electronic device or may be deployed on an electronic device. The electronic device may be, for example, a mobile phone, a tablet computer, or a wearable electronic device (such as a smartwatch) having a wireless communication function.

In the method, the first apparatus may obtain a first query request, where the first query request is at least used for requesting to query position information of a second apparatus. The first apparatus determines, in response to the first query request, a target apparatus as a to-be-positioned object by using a position status relationship between the second apparatus and a third apparatus and battery level information of an apparatus (including the second apparatus and/or the third apparatus), and then positions the target apparatus to accurately determine the position information of the second apparatus, so as to provide an effective solution of how to determine the accurate position information of the second apparatus.

For example, in a process in which the first apparatus searches for the second apparatus in response to the first query request, after determining apparatus information, the first apparatus may determine the target apparatus (including the second apparatus or the third apparatus) based on a condition that the apparatus information satisfies, and then position the target apparatus, to determine the position information of the second apparatus.

For example, when the apparatus information satisfies a first condition, the first apparatus determines that the target apparatus is the third apparatus. The first condition may include:
a battery level of the third apparatus is greater than or equal to a first battery level threshold; and
the second apparatus is accommodated in the third apparatus.

When the second apparatus is accommodated in the third apparatus, the second apparatus is close to the third apparatus, and it may be considered as that the second apparatus and the third apparatus have same position information. In this case, the second apparatus may be positioned to obtain the position information of the second apparatus, or the third apparatus may be positioned to obtain the position information of the second apparatus. Considering that when the second apparatus is accommodated in the third apparatus, a detection signal for interaction between the first apparatus and the second apparatus is weak, the position information of the second apparatus obtained by the first apparatus by positioning the third apparatus is more accurate.

For example, when the apparatus information satisfies a second condition, the first apparatus determines that the target apparatus is the second apparatus.

In an example, the second condition may include:
a battery level of the second apparatus is greater than or equal to a second battery level threshold; and
the second apparatus is not accommodated in the third apparatus.

When the second apparatus is not accommodated in the third apparatus, the position information of the second apparatus should be different from the position information of the third apparatus. Therefore, when the second apparatus has battery power, the accurate position information of the second apparatus can be obtained by directly positioning the second apparatus.

In another example, the second condition may include:
a battery level of the second apparatus is greater than or equal to a second battery level threshold;
a battery level of the third apparatus is less than a first battery level threshold; and
the second apparatus is accommodated in the third apparatus.

When the third apparatus is out of battery power but the second apparatus has battery power, the second apparatus is used as the target apparatus to position the second apparatus to obtain the position information of the second apparatus, to avoid a problem that the second apparatus cannot be found because the second apparatus is accommodated in the third apparatus and the third apparatus is out of battery power.

For example, to implement accurate positioning of the second apparatus, it is considered to position another apparatus (for example, a fourth apparatus) accommodated in the third apparatus, to determine the position information of the second apparatus. For example, when the apparatus information satisfies a third condition, the first apparatus determines that the target apparatus is the fourth apparatus. The third condition includes:
both the second apparatus and the fourth apparatus are accommodated in the third apparatus;
a battery level of the second apparatus is less than a second battery level threshold;
a battery level of the third apparatus is less than a first battery level threshold; and
a battery level of the fourth apparatus is greater than or equal to a third battery level threshold.

When both the second apparatus and the fourth apparatus are accommodated in the third apparatus, the second apparatus is close to the fourth apparatus, and it may be considered as that the second apparatus and the fourth apparatus have same position information. In this case, if the second apparatus and the third apparatus are out of battery power and the fourth apparatus has battery power, the fourth apparatus is positioned to determine the position information of the second apparatus, to improve a success probability of searching for the second apparatus.

For example, the position information of the second apparatus determined by the first apparatus includes a distance and/or an angle between the second apparatus and the first apparatus, to accurately indicate a position of the second apparatus.

For example, the first apparatus may send detection information to the target apparatus to position the target apparatus, to obtain the position information of the second apparatus; or the first apparatus may receive detection information sent by the target apparatus to position the target apparatus, to obtain the position information of the second apparatus. When the first apparatus sends the detection information to the target apparatus to implement positioning, the position information may be determined based on a detection signal reflected by the target apparatus, and processing complexity is low. When the first apparatus receives the detection information sent by the target apparatus to implement positioning, signal reflection is not involved, and positioning accuracy is higher.

For example, the first apparatus may receive time synchronization information sent by the target apparatus, determine a time offset between the first apparatus and the target apparatus based on the time synchronization information, and determine the position information of the second apparatus based on the time offset and the detection information. The position information of the second apparatus is determined with reference to the time synchronization information and the detection information, to improve accuracy of positioning the second apparatus.

For example, the first apparatus displays a first interface, to present the target apparatus and position status information between the second apparatus and the third apparatus through the first interface. A visualized positioning process is provided to display a positioning basis, so as to improve user experience.

It is considered, in some scenarios, to use the third apparatus as the target apparatus for positioning, so that accurate positioning of the second apparatus can be implemented. For example, when the second apparatus is accommodated in the third apparatus, the accurate position information of the second apparatus may be obtained by positioning the third apparatus. Therefore, when the battery level of the third apparatus is insufficient, the second apparatus may perform reverse energy supplement on the third apparatus, so that the third apparatus has a battery level sufficient for positioning. The first apparatus then positions the third apparatus to obtain the position information of the second apparatus.

For example, when the apparatus information satisfies a fourth condition, it is determined that the target apparatus is the third apparatus, and the second apparatus is controlled to perform energy supplement on the third apparatus, where the fourth condition includes:
a battery level of the second apparatus is greater than or equal to a fourth battery level threshold;
a battery level of the third apparatus is less than a first battery level threshold; and
the second apparatus is accommodated in the third apparatus.

To improve a success rate of energy supplement on the third apparatus, it is considered to use another apparatus that can be accommodated in the third apparatus, for example, the fourth apparatus, to perform energy supplement on the third apparatus. For example, the first apparatus may determine whether the apparatus information satisfies a fifth condition, and when the apparatus information satisfies the fifth condition, determine that the target apparatus is the fourth apparatus, and control the second apparatus and/or the fourth apparatus to perform energy supplement on the third apparatus. The fifth condition includes:
both the second apparatus and the fourth apparatus are accommodated in the third apparatus;
a battery level of the third apparatus is less than a first battery level threshold; and
a battery level of the second apparatus is greater than or equal to a fifth battery level threshold, and/or a battery level of the fourth apparatus is greater than or equal to a sixth battery level threshold.

For example, the first apparatus may display a second interface, to present the position information of the second apparatus through the second interface, so that a user learns of the position of the second apparatus in a visualized manner.

According to a second aspect, an embodiment of this application provides a positioning method. The method is performed by a same execution body as the method in the first aspect, and may be performed by the first apparatus.

In the method, the first apparatus displays a third interface, and the third interface presents a first apparatus control and a second apparatus control, or the third interface presents a third apparatus control, where the first apparatus control corresponds to a second apparatus, the second apparatus control corresponds to a third apparatus that does not accommodate the second apparatus, and the third apparatus control corresponds to the third apparatus that accommodates the second apparatus, and receives a select operation performed by a user on a target apparatus control, where the target apparatus control is the first apparatus control, the second apparatus control, or the third apparatus control. Then, the first apparatus positions, based on detection information, an apparatus corresponding to the target apparatus control, to obtain position information. Finally, the first apparatus displays a fourth interface, where the fourth interface presents the position information. When the target apparatus control is the first apparatus control, the position information includes position information of the second apparatus; or when the target apparatus control is the third apparatus control, the position information includes position information of the second apparatus and the third apparatus.

The first apparatus interacts with the user through an interface to determine a to-be-searched object, and then accurately searches for the to-be-searched object based on the detection information, to improve user experience. Further, when the to-be-searched object is the second apparatus that can be accommodated in another apparatus, accurate searching may be performed on the second apparatus based on the detection information. When the to-be-searched object is the third apparatus that can accommodate the second apparatus, the third apparatus is positioned based on the detection information, and accurate position information of the third apparatus and the second apparatus may be obtained. The method may be applied to positioning of a multi-component product.

For example, the third interface presents the first apparatus control and the second apparatus control, and the second apparatus control corresponds to the third apparatus that accommodates the fourth apparatus; or the third interface presents the third apparatus control, and the third apparatus control corresponds to the third apparatus that accommodates the second apparatus and the fourth apparatus. When the target apparatus control is the second apparatus control, the position information includes position information of the third apparatus and the fourth apparatus; or when the target apparatus control is the third apparatus control, the position information includes position information of the second apparatus, the third apparatus, and the fourth apparatus. The first apparatus positions the third apparatus, and may obtain position information of the third apparatus and an apparatus (for example, the second apparatus and/or the fourth apparatus) accommodated in the third apparatus. This may be applied to positioning of a multi-component product.

For example, that the first apparatus positions, based on the detection information, the apparatus corresponding to the target apparatus control to obtain the position information includes: sending the detection information to the apparatus corresponding to the target apparatus control to position the apparatus, to obtain the position information; or receiving the detection information sent by the apparatus corresponding to the target apparatus control to position the apparatus, to obtain the position information. A technical effect thereof has been described in the first aspect.

For example, that the first apparatus positions, based on the detection information, the apparatus corresponding to the target apparatus control to obtain the position information includes: receiving time synchronization information sent by the apparatus corresponding to the target apparatus control; determining, based on the time synchronization information, a time offset between the first apparatus and the apparatus corresponding to the target apparatus control; and determining the position information based on the time offset and the detection information. A technical effect thereof has been described in the first aspect.

Optionally, the position information includes a distance and/or an angle between the apparatus corresponding to the target apparatus control and the first apparatus. A technical effect thereof has been described in the first aspect.

According to a third aspect, an embodiment of this application provides a positioning method. The method may be performed by a second apparatus. The second apparatus may be implemented as an electronic device or a component in the electronic device. The electronic device may be accommodated in another electronic device (for example, an electronic device implemented by a third apparatus, or an electronic device to which the third apparatus belongs).

The method includes: sending detection information to a first apparatus in response to a positioning instruction sent by the first apparatus; or determining, based on apparatus information, that a target apparatus is the second apparatus, where the apparatus information includes first position status information and first battery level information, the first position status information indicates whether the second apparatus is accommodated in the third apparatus, and the first battery level information indicates a battery level of the second apparatus and/or a battery level of the third apparatus; and sending detection information to a first apparatus, where the detection information is used for determining position information of the second apparatus.

For example, determining, based on the apparatus information, that the target apparatus is the second apparatus includes: when the apparatus information satisfies a second condition, determining that the target apparatus is the second apparatus, where the second condition includes:
the battery level of the second apparatus is greater than or equal to a second battery level threshold; and
the second apparatus is not accommodated in the third apparatus;
   or
the battery level of the second apparatus is greater than or equal to a second battery level threshold;
the battery level of the third apparatus is less than a first battery level threshold; and
the second apparatus is accommodated in the third apparatus.

For example, the method further includes: sending time synchronization information to the first apparatus, where the time synchronization information is used for determining the position information of the second apparatus with reference to the detection information.

According to a fourth aspect, an embodiment of this application provides a positioning apparatus, including a processor and a memory. The memory is configured to store a computer program, and the processor is configured to invoke and run the computer program stored in the memory, to enable the positioning apparatus to perform the method in the first aspect, the second aspect, the third aspect, or the possible implementations.

According to a fifth aspect, an embodiment of this application provides a positioning system, including: a first apparatus, a second apparatus, and a third apparatus that can accommodate the second apparatus. The first apparatus is configured to: obtain a first query request, where the first query request is at least used for requesting to query position information of the second apparatus; determine apparatus information, where the apparatus information includes first position status information and first battery level information, the first position status information indicates whether the second apparatus is accommodated in the third apparatus, and the first battery level information indicates a battery level of the second apparatus and/or a battery level of the third apparatus; determine a target apparatus based on the apparatus information, where the target apparatus is the second apparatus, the third apparatus, or another apparatus accommodated in the third apparatus; and position the target apparatus based on detection information, to obtain the position information of the second apparatus.

For example, the system further includes a fourth apparatus. The apparatus information further includes second position status information and second battery level information, where the second position status information indicates whether the fourth apparatus is accommodated in the third apparatus, and the second battery level information indicates a battery level of the fourth apparatus.

According to a sixth aspect, an embodiment of this application provides a computer-readable storage medium, configured to store computer program instructions. The computer program instructions enable a computer to perform the method in any one of the first aspect, the second aspect, the third aspect, or the possible implementations.

According to a seventh aspect, an embodiment of this application provides a computer program product, including computer program instructions. The computer program instructions enable a computer to perform the method in any one of the first aspect, the second aspect, the third aspect, or the possible implementations.

For beneficial effect of the possible implementations of the third aspect to the seventh aspect, refer to the beneficial effect brought by the first aspect and the second aspect. Details are not described herein again.

### BRIEF DESCRIPTION OF DRAWINGS

FIG. 1 is a diagram of a structure of an electronic device;
FIG. 2 is a diagram of an application scenario of device positioning according to an embodiment of this application;
FIG. 3 is a schematic flowchart of a positioning method according to an embodiment of this application;
FIG. 4a is a schematic flowchart of a positioning method according to an embodiment of this application;
FIG. 4b is a schematic flowchart of another positioning method according to an embodiment of this application;
FIG. 5 is a schematic flowchart of another positioning method according to an embodiment of this application;
FIG. 6a is a diagram of an interface display of a target apparatus according to an embodiment of this application;
FIG. 6b is a diagram of another interface display of a target apparatus according to an embodiment of this application;
FIG. 6c is a diagram of another interface display of a target apparatus according to an embodiment of this application;
FIG. 7a is a diagram of an interface display of a target apparatus according to an embodiment of this application;
FIG. 7b is a diagram of another interface display of a target apparatus according to an embodiment of this application;
FIG. 8 is a diagram of an interface display of position information according to an embodiment of this application;
FIG. 9a-1 and FIG. 9a-2 are a diagram of an interface of apparatus positioning according to an embodiment of this application;

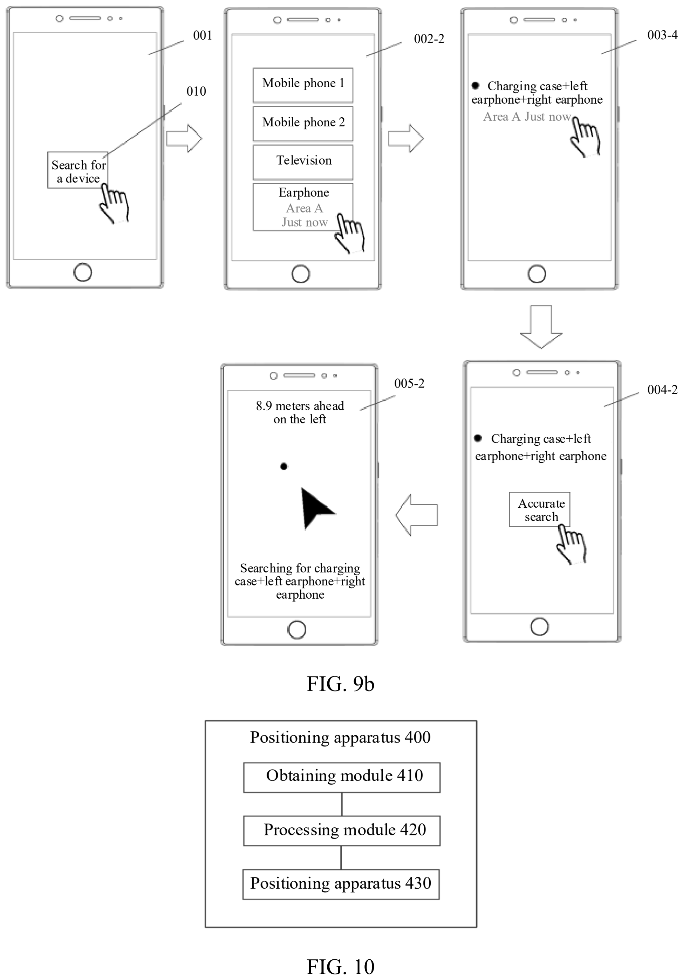

FIG. 9b is a diagram of another interface of apparatus positioning according to an embodiment of this application;
FIG. 10 is a schematic block diagram of a positioning apparatus according to an embodiment of this application;

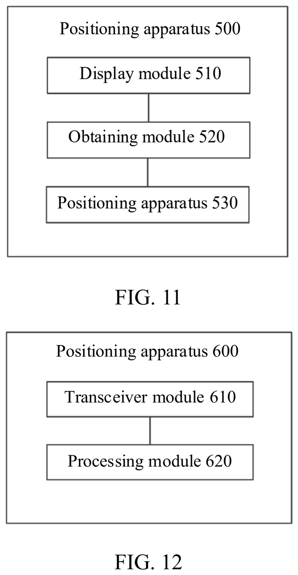

FIG. 11 is a schematic block diagram of a positioning apparatus according to an embodiment of this application; and
FIG. 12 is a schematic block diagram of a positioning apparatus according to an embodiment of this application.

### DESCRIPTION OF EMBODIMENTS

An electronic device, a graphical user interface used for such an electronic device, and embodiments used for using such an electronic device are described first. In some embodiments, the electronic device may be a portable electronic device that further includes another function like a personal digital assistant function and/or a music player function, for example, a mobile phone, a tablet computer, or a wearable electronic device (for example, a smartwatch) having a wireless communication function. The portable electronic device may alternatively be another portable electronic device, for example, a laptop (Laptop) having a touch-sensitive surface or a touch panel. It should be further understood that, in some other embodiments, the electronic device may alternatively be a desktop computer having a touch-sensitive surface or a touch panel, instead of the portable electronic device. A form of the electronic device is not limited in embodiments of this application.

The term "user interface (user interface, UI)" in the specification, claims, and accompanying drawings of this application is a medium interface for interaction and information exchange between a user and an application or an operating system, and implements conversion between an internal form of information and a form acceptable to the user. A user interface of the application is source code written in a specific computer language, for example, Java or an extensible markup language (extensible markup language, XML). The interface source code is parsed and rendered on a terminal device, and finally presented as user-recognizable content, for example, a control such as a picture, a text, or a button. A control (control) is also referred to as a widget (widget), and is a basic element of the user interface. Typical controls include a toolbar (toolbar), a menu bar (menu bar), a text box (text box), a button (button), a scrollbar (scrollbar), an image, and text. An attribute and content of a control on the interface are defined through a tag or a node. For example, in XML, the control on the interface is specified through the node such as <TextView>, <ImgView>, or <VideoView>. One node corresponds to one control or one attribute in the interface. After being parsed and rendered, the node is displayed as user-visible content.

A frequently-used representation form of the user interface is a graphical user interface (graphical user interface, GUI), and is a user interface that is displayed in a graphical manner and that is related to a computer operation. It may be an interface element such as an icon, a window, or a control displayed on a display of the electronic device. The control may include a visual interface element such as an icon, a button, a menu, a tab, a text box, a dialog box, a status bar, a navigation bar, and a widget.

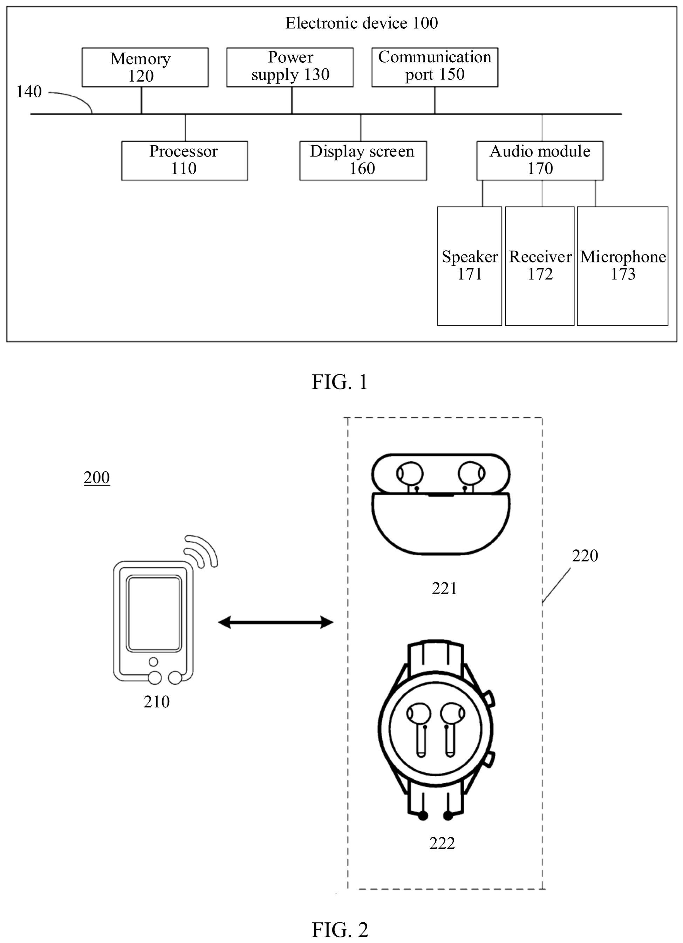

FIG. 1 is a diagram of a structure of an electronic device. Refer to FIG. 1. The electronic device may include a processor 110 (for example, a CPU) and a memory 120. The memory 120 may include a high-speed random-access memory (random-access memory, RAM), and may further include a non-volatile memory (non-volatile memory, NVM), for example, at least one magnetic disk memory. The memory 120 may store various instructions, to complete various processing functions and implement steps of a method in this application.

Optionally, the electronic device in this application may further include a power supply 130, a communication bus 140, and a communication port 150. The communication port 150 is configured to implement a connection and communication between the electronic device and another peripheral device. In this embodiment of this application, the memory 120 is configured to store computer-executable program code. The program code includes instructions. When the processor 110 executes the instructions, the instructions enable the processor 110 of the electronic device to perform the actions in the foregoing method embodiments. Implementation principles and technical effects thereof are similar to those in the foregoing method embodiments. Details are not described herein again.

Optionally, the electronic device in this application may further include a display screen 160, and the display screen 160 is configured to display an interface of the electronic device.

It should be noted that the modules or the components in the foregoing embodiments may be configured as one or more integrated circuits for implementing the foregoing methods, for example, one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form of scheduling program code by a processing element, the processing element may be a general-purpose processor, for example, a central processing unit (central processing unit, CPU) or another processor that can invoke the program code, for example, a controller. For another example, these modules may be integrated together and implemented in a form of a system-on-a-chip (system-on-a-chip, SoC).

The electronic device 100 may include an audio module 170. The audio module 170 implements an audio function by using a speaker 171, a receiver 172, a microphone 173, a headset interface 174, an application processor, and the like, for example, receiving an audio signal, playing music, and recording.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 171, also referred to as a "loudspeaker", is configured to convert an electrical audio signal into a sound signal. The electronic device 100 may be used to listen to music or answer a call in a hands-free mode by using the speaker 171.

The receiver 172, also referred to as an "earpiece", is configured to convert an electrical audio signal into a sound signal. When a call is answered or speech information is received through the electronic device 100, the receiver 172 may be put close to a human ear to listen to a voice.

The microphone 173, also referred to as a "mike" or a "mic", is configured to convert a sound signal into an electrical signal. When making a call or sending a voice message, a user may make a sound near the microphone 173 through the mouth of the user, to input a sound signal to the microphone 173. At least one microphone 173 may be disposed in the electronic device 100. In some other embodiments, two microphones 173 may be disposed in the electronic device 100, to collect a sound signal and implement a noise reduction function. In some other embodiments, three, four, or more microphones 173 may alternatively be disposed in the electronic device 100, to collect a sound signal, implement noise reduction, and identify a sound source, so as to implement a directional recording function and the like.

FIG. 2 is a diagram of an application scenario 200 of device positioning according to an embodiment of this application. As shown in FIG. 2, a first device 210 is in a communication connection with a second device 220. The first device 210 may be implemented as the foregoing electronic device. The second device 220 may be a multi-component product, for example, a multi-component product 221 including wireless earphones and a charging case, or a multi-component product 222 including wireless earphones and a watch.

The wireless earphones may be used together with the first device 210, to process an audio service such as media and calls of the electronic device, as well as some other data services. For example, the audio service may include a service such as playing music, recording, and an incoming call prompt tone for a user, and may further include playing a voice from a peer end for the user, or collecting voice data of the user and sending the voice data to the peer end in a call service scenario such as a call, a voice message, an audio call, a video call, a game, or a voice assistant.

A case that accommodates the wireless earphones and that is in the second device 220 may be disposed independently, for example, 221 in FIG. 2. The wireless earphones are accommodated in the charging case. Alternatively, the charging case that accommodates the wireless earphones and that is in the second device 220 may be disposed in an electronic device (for example, a watch), for example, 222 in FIG. 2. A quantity of wireless earphones is not limited in this application. For example, the second device 220 may be a single-ear headset device including one wireless earphone, a dual-ear headset device including two wireless earphones, or a shared headset device including three or more wireless earphones.

In some embodiments, the wireless earphone in this application may include a processor, a memory, a speaker, a communication port, and the like. For the processor, the memory, the speaker, and the communication port, refer to related descriptions of corresponding modules in the electronic device.

In some embodiments, the charging case in this application may include a processor, a memory, a speaker, a communication port, and the like. For the processor, the memory, the speaker, and the communication port, refer to related descriptions of corresponding modules in the electronic device.

When the wireless earphone is disposed in the charging case, the first device 210 is in a communication connection with the charging case in the second device 220 or an electronic device on which the charging case is disposed. When the wireless earphone is disposed outside the charging case, the first device 210 is in a communication connection with both the charging case in the second device 220 and the wireless earphone disposed outside the charging case.

In some scenarios, because no positioning chip is deployed on the wireless earphone in the second device 220, it is difficult to implement accurate positioning. In this case, accuracy of positioning of the wireless earphone through Bluetooth communication between the first device 210 and the wireless earphone is low. In some other scenarios, when the wireless earphone is accommodated in the charging case, the first device 210 and the wireless earphone in the second device 220 do not interact with each other, and positioning of the wireless earphone cannot be implemented. Therefore, there is currently a lack of effective solutions for positioning a device in a multi-component product.

To implement accurate positioning of a component in the multi-component product, embodiments of this application provide a positioning solution, in which "detection information" is introduced. Position information of a wireless earphone is determined based on the detection information, and a target object to be detected based on the detection information is determined with reference to battery level information of the multi-component product and a position relationship between an earphone and a charging case, to implement accurate positioning of the wireless earphone based on a relationship between devices in the multi-component product.

The detection information may be an ultrasonic signal, but this is not limited in this application. For example, the detection information may be an infrared signal and the like.

A composition of the multi-component product is not limited in this application. The multi-component product in embodiments of this application may further include another device combination, for example, smart glasses and a glasses case. For ease of understanding, in some embodiments, a multi-component product including an earphone and a charging case is used as an example for description.

It should be noted that positioning an apparatus (or a device) may also be expressed as determining or obtaining position information of the apparatus (or the device), and meanings of the two expressions are consistent. In addition, for ease of description, a word order may be changed without altering the meaning of the expression. For example, the apparatus (or the device) being positioned may also be expressed as positioning the apparatus (or the device).

The following describes in detail the positioning method provided in embodiments of this application with reference to the accompanying drawings.

It should be understood that the following is merely for ease of understanding and description. In embodiments of this application, an example in which a first apparatus is an execution body is used for description. The first apparatus may be the first device 210 in FIG. 2, or a component (for example, a chip, a chip system, or another functional module that can invoke a program and execute the program) in the first device 210. In some embodiments, interaction between the first apparatus, a second apparatus, and a third apparatus is used as an example for description. The second apparatus may be a wireless earphone in the second device 220 in FIG. 2, or a component (for example, a chip, a chip system, or another functional module that can invoke a program and execute the program) in the wireless earphone. The third apparatus may be the charging case in the second device 220 in FIG. 2, or a component (for example, a chip, a chip system, or another functional module that can invoke a program and execute the program) in the charging case. In some other embodiments, interaction between the first apparatus, the second apparatus, the third apparatus, and a fourth apparatus is used as an example for description. The fourth apparatus may be another wireless earphone in the second device 220 in FIG. 2, or a component (for example, a chip, a chip system, or another functional module that can invoke a program and execute the program) in the wireless earphone.

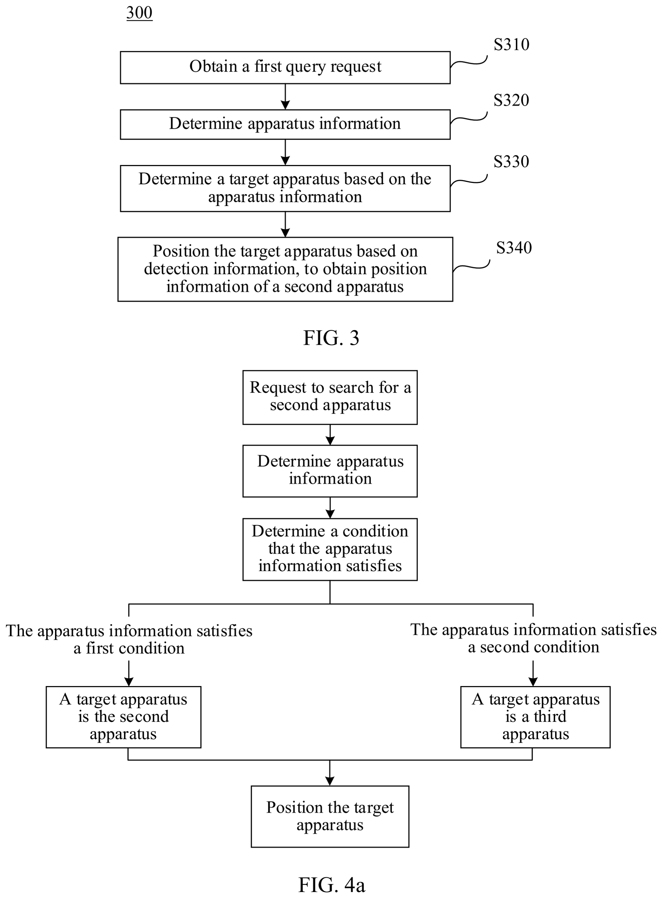

FIG. 3 is a schematic flowchart of a positioning method 300 according to an embodiment of this application. As shown in FIG. 3, the method 300 may include a part of or all processes in S310 to S340. The following describes steps in the method 300 in detail.

S310: A first apparatus obtains a first query request.

S320: The first apparatus determines apparatus information.

S330: The first apparatus determines a target apparatus based on the apparatus information.

S340: The first apparatus positions the target apparatus based on detection information, to obtain position information of a second apparatus.

The target apparatus may be the second apparatus, a third apparatus, or another apparatus accommodated in the third apparatus. A multi-component product including a wireless earphone and a charging case is used as an example. The third apparatus may be the charging case, and the second apparatus may be one wireless earphone. In addition to the second apparatus, the third apparatus may further accommodate another apparatus, for example, a fourth apparatus in the following descriptions. The fourth apparatus may be another wireless earphone accommodated in the charging case.

The first query request may be entered by a user. In other words, the first query request may be generated in response to a user operation. The first query request may be used for requesting to query position information of one or more apparatuses (or devices) in the multi-component product. For example, the multi-component product is a wireless earphone and a charging case. The first query request may be used for requesting to query position information of one or more wireless earphones and/or a charging case. In addition, in this application, the first query request is at least used for requesting to query position information of the second apparatus. The multi-component product including the wireless earphone and the charging case is still used as an example, and the first query request is at least used for requesting to query position information of one wireless earphone.

It should be noted that, when the first query request is further used for requesting position information of another apparatus (for example, another wireless earphone), an implementation that is the same as or similar to that of positioning the second apparatus may be used to position the another apparatus to obtain the position information of the another apparatus. For brevity, details are not described.

The apparatus information may include battery level information of one or more apparatuses in the multi-component product. The apparatus information may further include a position relationship between apparatuses in the multi-component product, for example, the wireless earphone is accommodated in the charging case or is not accommodated in the charging case. In some embodiments, the apparatus information may include first position status information and first battery level information. The first position status information indicates whether the second apparatus is accommodated in the third apparatus, and the first battery level information indicates a battery level of the second apparatus and/or a battery level of the third apparatus.

The apparatus information may be sent by the second apparatus. For example, the second apparatus may send, to the first apparatus, battery level information of the second apparatus and/or position status information indicating whether the second apparatus is accommodated in the third apparatus. In this application, it is not excluded that the second apparatus sends battery level information of the third apparatus and/or position status information. For example, the second apparatus may obtain the battery level information of the third apparatus through a contact connection or a wireless connection to the third apparatus, and send the battery level information of the third apparatus to the first apparatus.

The apparatus information may be sent by the third apparatus. For example, the third apparatus may send battery level information of the second apparatus and/or the third apparatus to the first apparatus. For another example, the third apparatus may send, to the first apparatus, position status information indicating whether the second apparatus is accommodated in the third apparatus. The third apparatus may obtain the battery level information of the second apparatus and/or the position status information through a contact connection or a wireless connection.

The apparatus information may alternatively be sent by the second apparatus and the third apparatus. In this case, the second apparatus and the third apparatus may separately send same apparatus information. Alternatively, the second apparatus and the third apparatus may separately send a part of the apparatus information. For example, the second apparatus may send, to the first apparatus, battery level information of the second apparatus and position status information indicating whether the second apparatus is accommodated in the third apparatus, and the third apparatus may send battery level information of the third apparatus to the first apparatus. For another example, the second apparatus may send battery level information of the second apparatus to the first apparatus, the third apparatus may send, to the first apparatus, position status information indicating whether an apparatus (including the second apparatus) that can be accommodated in the third apparatus is accommodated in the third apparatus, and the like.

In some embodiments, the apparatus information may further include second position status information and second battery level information. The second position status information indicates whether the fourth apparatus is accommodated in the third apparatus, and the second battery level information indicates a battery level of the fourth apparatus. Both the second position status information and the second battery level information may be sent by the fourth apparatus to the first apparatus; or both the second position status information and the second battery level information may be sent by the third apparatus; or the second position status information and the second battery level information are sent by the fourth apparatus and the third apparatus, for example, the fourth apparatus sends the second position status information to the first apparatus, and the third apparatus sends the second battery level information to the first apparatus.

At least some information of the first battery level information, the second battery level information, the first position status information, and the second position status information may be sent together, or the first battery level information, the second battery level information, the first position status information, and the second position status information may be sent independently.

It should be noted that the apparatus information may be information sent by the second apparatus and/or the third apparatus in a broadcast manner. The first apparatus may enable broadcast scanning, to detect and receive the apparatus information sent by the second apparatus and/or the third apparatus in a broadcast manner. It should be further understood that the first apparatus may be first paired with the multi-component product, and after the pairing, receives information sent by an apparatus in the multi-component product. Optionally, the first apparatus may be paired with the second apparatus through a basic rate (basic rate, BR) link, and the first apparatus may be paired with the third apparatus through a Bluetooth low energy (Bluetooth low energy, BLE) link.

It can be learned that the apparatus information reflects a battery level of the multi-component product and a position relationship between apparatuses, and may be used for determining which apparatus is to be positioned, so that the position information of the second apparatus can be accurately obtained.

In an example, the first apparatus may receive the detection information sent by the target apparatus to position the target apparatus, and determine position information of the target apparatus based on the received detection information. For example, the detection information is an ultrasonic signal. The first apparatus may send a positioning instruction to the target apparatus. The target apparatus may send, in response to the positioning instruction, the ultrasonic signal by using a speaker. The first apparatus may receive, by using a microphone, the ultrasonic signal sent by the target apparatus, and estimate the position information of the target apparatus based on the ultrasonic signal.

In some embodiments, the target apparatus may determine, based on the apparatus information, whether to send the detection information. Using the second apparatus as an example, the second apparatus may determine, based on the apparatus information, whether the target apparatus is the second apparatus, and when determining that the target apparatus is the second apparatus, send the detection information to the first apparatus. A process in which the second apparatus determines the target apparatus based on the apparatus information is the same as or similar to a process in which the first apparatus determines the target apparatus. For brevity, details are not described. Optionally, the second apparatus may determine the target apparatus based on the apparatus information when the first apparatus sends the positioning instruction, and send the detection information when determining that the target apparatus is the second apparatus.

In another example, the first apparatus may send the detection information to the target apparatus to position the target apparatus. For example, the detection information is an ultrasonic signal. The first apparatus may send the ultrasonic signal to the target apparatus by using a speaker, and receive a reflected signal of the ultrasonic signal from the target apparatus by using a microphone, to estimate the position information of the target apparatus based on the received reflected signal.

Similar to the foregoing example, the first apparatus may send a radio frequency signal to the target apparatus, and receive a radio frequency signal reflected by the target apparatus, and the first apparatus estimates the position information of the target apparatus based on the received reflected radio frequency signal.

In still another example, the first apparatus may send the detection information to the target apparatus, and the target apparatus may determine the position information of the target apparatus, that is, the position information of the second apparatus, based on the received detection information, and send the position information to the first apparatus, to implement searching for the second apparatus.

Optionally, the position information of the second apparatus includes a distance and/or an angle between the second apparatus and the first apparatus. The angle between the second apparatus and the first apparatus may be an angle between a position of the second apparatus and any point or any surface of the first apparatus. For example, the angle between the second apparatus and the first apparatus may be an angle between the position of the second apparatus and a surface on which a screen of the first apparatus is located.

Generally, two microphones are deployed in an electronic device, and whether the second apparatus is on a left side or a right side of the first apparatus cannot be distinguished by using ultrasonic signals received by the two microphones. Therefore, in a process in which the first apparatus positions the target apparatus, to improve positioning accuracy, the first apparatus may determine the angle between the second apparatus and the first apparatus through rotation to remove mirroring. Rotation to remove mirroring may be implemented by rotating a mobile phone by the user. For example, the first apparatus presents, on an interface of a display screen, an operation prompt of rotation to remove mirroring, for example, "rotate the mobile phone", to prompt the user to perform a corresponding operation. The first apparatus accurately determines the angle between the second apparatus and the first apparatus through comprehensive determining based on an ultrasonic signal (or a reflected signal) received before the user rotates the mobile phone and an ultrasonic signal (or a reflected signal) received after the user rotates the mobile phone.

In some embodiments, in a process in which the first apparatus positions the target apparatus, the first apparatus may receive time synchronization information sent by the target apparatus, determine a time offset between the first apparatus and the target apparatus based on the time synchronization information, and determine the position information of the second apparatus based on the time offset and the received detection information that is sent by the target apparatus. For example, the first apparatus may determine a distance between the target apparatus and the first apparatus based on the time offset and the detection information, and determine an angle between the target apparatus and the first apparatus based on the detection information.

For example, the first apparatus may indicate, through Bluetooth, the target apparatus to perform Bluetooth time synchronization. For example, the target apparatus may send one or more time synchronization frames to the first apparatus in response to the positioning instruction. The time synchronization frame carries information such as sending time and callback time. After receiving the time synchronization frame sent by the target apparatus, the first apparatus calculates the time offset, to correct a time difference between the first apparatus and the target apparatus.

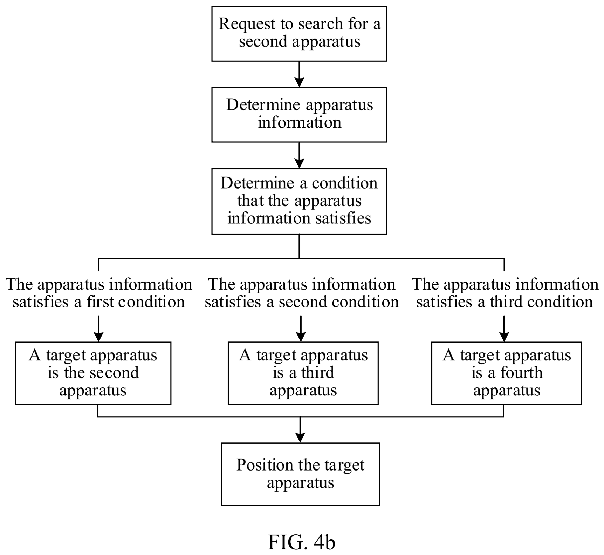

In the following, the target apparatus is determined, with reference to FIG. 4a and FIG. 4b, by determining a condition that the apparatus information satisfies.

In an implementation shown in FIG. 4a, in a process in which the first apparatus searches for the second apparatus in response to the first query request, after determining the apparatus information, the first apparatus may determine the target apparatus (including the second apparatus or the third apparatus) based on the condition that the apparatus information satisfies, and then position the target apparatus, to determine the position information of the second apparatus.

For example, when the apparatus information satisfies a second condition, the first apparatus determines that the target apparatus is the second apparatus.

In an example, the second condition may include:
the battery level of the second apparatus is greater than or equal to a second battery level threshold; and
the second apparatus is not accommodated in the third apparatus.

It should be understood that, if the second apparatus is not accommodated in the third apparatus, the position information of the second apparatus should be different from that of the third apparatus. Therefore, the accurate position information of the second apparatus may be obtained by directly positioning the second apparatus, and positioning the second apparatus requires that the battery level of the second apparatus is greater than or equal to the second battery level threshold. The second battery level threshold may be understood as a required minimum battery level of the second apparatus when the second apparatus is positioned.

In another example, the second condition may include:
the battery level of the second apparatus is greater than or equal to a second battery level threshold;
the battery level of the third apparatus is less than a first battery level threshold; and
the second apparatus is accommodated in the third apparatus.

It should be understood that, if the second apparatus is accommodated in the third apparatus, the second apparatus is close to the third apparatus, and it may be considered as that the second apparatus and the third apparatus have same position information. In this case, the second apparatus may be positioned to obtain the position information of the second apparatus, or the third apparatus may be positioned to obtain the position information of the second apparatus. Considering that when the second apparatus is accommodated in the third apparatus, a detection signal for interaction between the first apparatus and the second apparatus is weak, the position information of the second apparatus obtained by positioning the third apparatus is more accurate. Based on this, if the battery level of the third apparatus is sufficient, for example, the battery level of the third apparatus is greater than or equal to the first battery level threshold, the third apparatus may be used as the target apparatus to position the third apparatus, to obtain the position information of the second apparatus; or if the battery level of the third apparatus is insufficient but the battery level of the second apparatus is sufficient, for example, the battery level of the third apparatus is less than the first battery level threshold, and the battery level of the second apparatus is greater than or equal to the second battery level threshold, the second apparatus may be used as the target apparatus to position the second apparatus, to obtain the position information of the second apparatus. The first battery level threshold may be a required minimum battery level of the third apparatus when the third apparatus is positioned. Optionally, the second battery level threshold may be the same as or different from the first battery level threshold. This is not limited in this application.

For example, when the apparatus information satisfies a first condition, the first apparatus determines that the target apparatus is the third apparatus.

In an example, the first condition may include:
the battery level of the third apparatus is greater than or equal to a first battery level threshold; and
the second apparatus is accommodated in the third apparatus.

As described above, if the second apparatus is accommodated in the third apparatus, the position information of the second apparatus may be accurately determined by positioning the third apparatus. Therefore, when the battery level of the third apparatus is sufficient, the first apparatus may position the third apparatus.

In an embodiment shown in FIG. 4a, the apparatus information may include the first position status information and the first battery level information. The first position status information and the first battery level information are described in the foregoing examples. For brevity, details are not described again.

In some embodiments, it may be further considered to position another apparatus (for example, the fourth apparatus) accommodated in the third apparatus, to determine the position information of the second apparatus. For example, refer to FIG. 4b. When the apparatus information satisfies a third condition, the first apparatus determines that the target apparatus is the fourth apparatus.

The third condition may include:
both the second apparatus and the fourth apparatus are accommodated in the third apparatus;
the battery level of the second apparatus is less than a second battery level threshold;
the battery level of the third apparatus is less than a first battery level threshold; and
the battery level of the fourth apparatus is greater than or equal to a third battery level threshold.

It should be understood that, when both the second apparatus and the fourth apparatus are accommodated in the third apparatus, the second apparatus, the third apparatus, and the fourth apparatus are close to each other, and it may be considered as that the second apparatus, the third apparatus, and the fourth apparatus have same position information. In this case, if both the battery level of the second apparatus and the battery level of the third apparatus are insufficient but the battery level of the fourth apparatus is sufficient, for example, the battery level of the fourth apparatus is greater than or equal to the third battery level threshold, it is considered to position the fourth apparatus to determine the position information of the second apparatus. The third battery level threshold may be a required minimum battery level of the fourth apparatus when the fourth apparatus is positioned. The third battery level threshold may be the same as or different from the second battery level threshold, and the third battery level threshold may be the same as or different from the first battery level threshold. This is not limited in this application.

In some embodiments, the third condition may not require that the battery level of the second apparatus is less than the second battery level threshold. In other words, even though the battery level of the second apparatus and the battery level of the fourth apparatus are sufficient, the fourth apparatus may be positioned to determine the position information of the second apparatus. Especially, when positioning accuracy of the fourth apparatus is higher than positioning accuracy of the second apparatus, it is preferentially considered to position the fourth apparatus. For example, when transmitting strength of an ultrasonic transmitting apparatus of the fourth apparatus is higher than transmitting strength of an ultrasonic transmitting apparatus of the second apparatus, it is considered to position the fourth apparatus.

In an embodiment shown in FIG. 4b, the apparatus information may include the first position status information and the first battery level information, and in addition, may further include the second position status information and the second battery level information. The second position status information and the second battery level information are described in the foregoing examples. For brevity, details are not described again.

It should be noted that, regardless of whether the multi-component product includes the fourth apparatus, the first apparatus may determine the target apparatus based on the second condition and/or the first condition. For example, when the apparatus information satisfies the second condition, the first apparatus determines that the target apparatus is the second apparatus, and when the apparatus information satisfies the first condition, the first apparatus determines that the target apparatus is the third apparatus. For another example, when the apparatus information satisfies neither the second condition nor the first condition, the first apparatus cannot determine the position information of the second apparatus, in other words, searching fails.

To improve a success probability of searching for the second apparatus, when the multi-component product includes the fourth apparatus, the first apparatus may determine the target apparatus based on the second condition, the first condition, and the third condition. For example, the first apparatus determines the second apparatus as the target apparatus when the apparatus information satisfies the second condition, determines the third apparatus as the target apparatus when the apparatus information satisfies the first condition, and determines the fourth apparatus as the target apparatus when the apparatus information satisfies the third condition. For another example, when the apparatus information does not satisfy any one of the second condition, the first condition, and the third condition, the first apparatus cannot determine the position information of the second apparatus, in other words, searching fails.

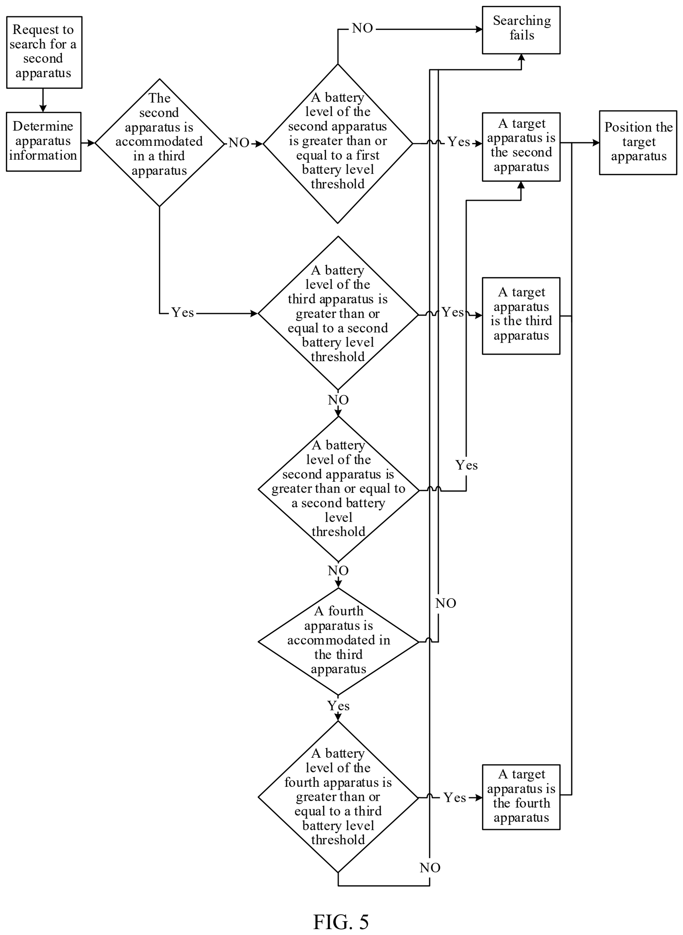

In some embodiments, the foregoing conditions may be split to implement logical processing at a finer granularity, so as to determine a corresponding target apparatus. Refer to FIG. 5. In a process in which the first apparatus searches for the second apparatus in response to the first query request, after determining the apparatus information, the first apparatus may determine the position information of the second apparatus based on the apparatus information.

For example, the first apparatus may determine whether the second apparatus is accommodated in the third apparatus. If the second apparatus is not accommodated in the third apparatus, the first apparatus may directly position the second apparatus, to obtain the accurate position information of the second apparatus. If the second apparatus is accommodated in the third apparatus, the first apparatus may further determine the target apparatus based on the battery levels of the second apparatus, the third apparatus, and the fourth apparatus.

Refer to FIG. 5. If the first apparatus determines that the second apparatus is not accommodated in the third apparatus, the first apparatus may determine whether the battery level of the second apparatus is greater than or equal to the second battery level threshold. If the battery level of the second apparatus is greater than or equal to the second battery level threshold, it is determined that the target apparatus is the second apparatus, and the second apparatus is positioned; or if the battery level of the second apparatus is less than the second battery level threshold, searching fails.

Refer to FIG. 5. If the first apparatus determines that the second apparatus is accommodated in the third apparatus, the first apparatus may determine whether the battery level of the third apparatus is greater than or equal to the first battery level threshold. If the battery level of the third apparatus is greater than or equal to the first battery level threshold, it is determined that the target apparatus is the third apparatus, and the third apparatus is positioned; or if the battery level of the third apparatus is less than the first battery level threshold, it is determined, based on the battery level of the second apparatus, whether the target apparatus is the second apparatus.

Refer to FIG. 5. The first apparatus may determine whether the battery level of the second apparatus is greater than or equal to the first battery level threshold. If the battery level of the second apparatus is greater than or equal to the first battery level threshold, it is determined that the target apparatus is the second apparatus, and the second apparatus is positioned; or if the battery level of the second apparatus is less than the first battery level threshold, it is determined whether the target apparatus is the fourth apparatus.

Refer to FIG. 5. The first apparatus may determine whether the fourth apparatus is accommodated in the third apparatus. If the fourth apparatus is not accommodated in the third apparatus, searching fails. If the fourth apparatus is accommodated in the third apparatus, the first apparatus may determine, based on the battery level of the fourth apparatus, whether the target apparatus is the fourth apparatus. If the battery level of the fourth apparatus is greater than or equal to the third battery level threshold, it is determined that the target apparatus is the fourth apparatus; or if the battery level of the fourth apparatus is less than the third battery level threshold, searching fails.

In some embodiments, it is considered to use the third apparatus as the target apparatus for positioning, to determine the position information of the second apparatus. This offers high accuracy. For example, when the second apparatus is accommodated in the third apparatus, the accurate position information of the second apparatus may be obtained by positioning the third apparatus. Therefore, when the battery level of the third apparatus is insufficient, the second apparatus may perform reverse energy supplement on the third apparatus, so that the third apparatus has a battery level sufficient for positioning. The first apparatus then positions the third apparatus to obtain the position information of the second apparatus.

For example, the first apparatus may determine whether the apparatus information satisfies a fourth condition, and when the apparatus information satisfies the fourth condition, determine that the target apparatus is the third apparatus, and control the second apparatus to perform energy supplement on the third apparatus. The fourth condition includes:
the battery level of the second apparatus is greater than or equal to a fourth battery level threshold;
the battery level of the third apparatus is less than a first battery level threshold; and
the second apparatus is accommodated in the third apparatus.

As described above, if the second apparatus is accommodated in the third apparatus, the position information of the second apparatus may be accurately determined by positioning the third apparatus. Therefore, it is considered to first perform energy supplement on the third apparatus, and then position the third apparatus. When the second apparatus performs energy supplement on the third apparatus, the battery level of the second apparatus needs to be sufficient, for example, the battery level of the second apparatus is greater than or equal to the fourth battery level threshold. The fourth battery level threshold may be the same as or different from the second battery level threshold. For example, the fourth battery level threshold may be a minimum battery level of the second apparatus for implementing a service function (such as audio playing).

For example, it may be considered to use another apparatus that can be accommodated in the third apparatus, for example, the fourth apparatus, to perform energy supplement on the third apparatus. For example, the first apparatus may determine whether the apparatus information satisfies a fifth condition, and when the apparatus information satisfies the fifth condition, determine that the target apparatus is the fourth apparatus, and control the second apparatus and/or the fourth apparatus to perform energy supplement on the third apparatus.

The fifth condition includes:
both the second apparatus and the fourth apparatus are accommodated in the third apparatus;
the battery level of the third apparatus is less than a first battery level threshold; and
the battery level of the second apparatus is greater than or equal to a fifth battery level threshold, and/or the battery level of the fourth apparatus is greater than or equal to a sixth battery level threshold.

Both the second apparatus and the fourth apparatus are accommodated in the third apparatus, and the battery level of the third apparatus is less than the first battery level threshold. In this case, if the battery level of the second apparatus is greater than or equal to the fifth battery level threshold, the second apparatus is controlled to perform energy supplement on the third apparatus, where the fifth battery level threshold may be the same as or different from the fourth battery level threshold; if it is determined that the battery level of the fourth apparatus is greater than or equal to the sixth battery level threshold, the first apparatus may control the fourth apparatus to perform energy supplement; or if it is determined that the battery level of the second apparatus is greater than or equal to the fifth battery level threshold and the battery level of the fourth apparatus is greater than or equal to the sixth battery level threshold, the first apparatus may select one of the second apparatus and the fourth apparatus (for example, one with a higher battery level) to perform energy supplement on the third apparatus, or the first apparatus may control the second apparatus and the fourth apparatus to perform energy supplement on the third apparatus together.

The battery level threshold (for example, one or more of the first battery level threshold to the sixth battery level threshold) in any one of the foregoing examples may be 0. In other words, when an apparatus has battery power, it is considered that a battery level of the apparatus is greater than or equal to a corresponding battery level threshold, and when the apparatus is out of battery power, it is considered that the battery level of the apparatus is less than the corresponding battery level threshold. Certainly, this is not limited in this application. For example, the battery level threshold may alternatively be greater than 0.

In some embodiments, the first apparatus may display a first interface, to present the target apparatus and position status information between the second apparatus and the third apparatus through the first interface. Optionally, the first interface may further present the battery level of the second apparatus and/or the battery level of the third apparatus.

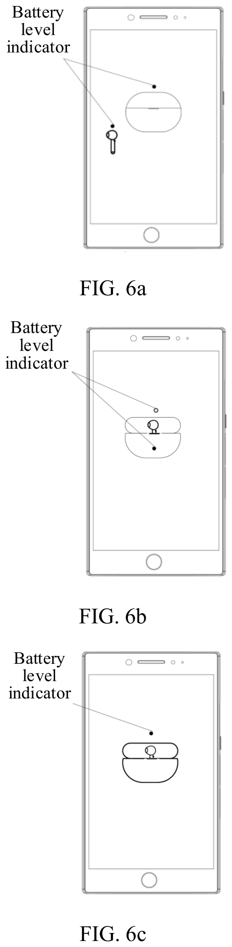

Refer to FIG. 6a. The first interface presents that the second apparatus is not accommodated in the third apparatus, and indicates, through bold display, that the target apparatus is the second apparatus. The first interface further presents a battery level indicator of the second apparatus that indicates that the battery level of the second apparatus is sufficient, and a battery level indicator of the third apparatus that indicates that the battery level of the third apparatus is sufficient. Refer to FIG. 6b. The first interface presents that the second apparatus is accommodated in the third apparatus, and indicates, through bold display, that the target apparatus is the second apparatus. The first interface further presents a battery level indicator of the second apparatus that indicates that the battery level of the second apparatus is sufficient, and a battery level indicator of the third apparatus that indicates that the battery level of the third apparatus is insufficient. Refer to FIG. 6c. The first interface presents that the second apparatus is accommodated in the third apparatus (or presents only the third apparatus, where the second apparatus is accommodated in the third apparatus by default), and indicates, through bold display, that the target apparatus is the third apparatus. The first interface further presents a battery level indicator of the third apparatus that indicates that the battery level of the third apparatus is sufficient, and may optionally present the battery level of the second apparatus.

In some embodiments, the third apparatus may further accommodate another apparatus, for example, the fourth apparatus. Optionally, the first interface may further present position status information between the fourth apparatus and the third apparatus. Optionally, the target apparatus that the first interface presents may be the fourth apparatus. Optionally, the first interface may further present the battery level of the fourth apparatus.

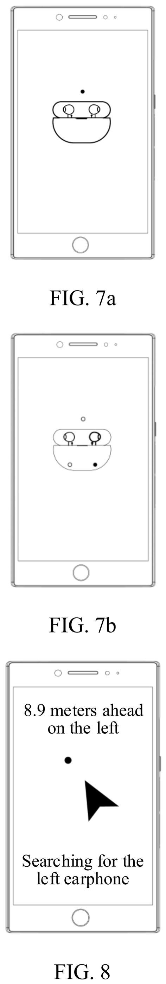

Refer to FIG. 7a. The first interface presents that both the second apparatus and the fourth apparatus are accommodated in the third apparatus, and indicates, through bold display, that the target apparatus is the third apparatus. The first interface further presents that the battery level of the third apparatus is sufficient, and may optionally present the battery level of the second apparatus and the battery level of the fourth apparatus. Refer to FIG. 7b. The first interface presents that both the second apparatus and the fourth apparatus are accommodated in the third apparatus, and indicates, through bold display, that the target apparatus is the fourth apparatus. The first interface further presents that the battery level of the second apparatus is insufficient, the battery level of the third apparatus is insufficient, and the battery level of the fourth apparatus is sufficient.

In this application, the target apparatus on the first interface is not limited to being presented through bold display, for example, the target apparatus may be presented through blinking display, or may be presented in a text manner.

In some embodiments, the first apparatus may display a second interface, to present the position information of the second apparatus through the second interface. Refer to FIG. 8. Using an example in which the second apparatus is a left earphone, the second interface may present a position cursor of the left earphone and a cursor (for example, an arrow) indicating a direction of the left earphone; a text indicating a direction and a distance between the left earphone and the first apparatus, for example, "8.9 meters ahead on the left"; and a text of searching for an object, for example, "searching for the left earphone".

Therefore, in an embodiment of this application, when the second apparatus needs to be searched for, the target apparatus used as a to-be-positioned object is determined based on a position status relationship between the second apparatus and the third apparatus and battery level information of an apparatus (including the second apparatus and/or the third apparatus), and the position information of the second apparatus can be accurately determined after the target apparatus is positioned, providing an effective solution of how to determine the accurate position information of the second apparatus.

To meet a user requirement and facilitate device query by the user, embodiments of this application further provide a user operation-based positioning method. The following provides an example description with reference to FIG. 9a-1, FIG. 9a-2, and FIG. 9b.

FIG. 9a-1, FIG. 9a-2, and FIG. 9b are diagrams of an interface of apparatus positioning according to an embodiment of this application. As shown in FIG. 9a-1 and FIG. 9a-2, a first apparatus may display a function interface 001, and the function interface 001 presents a control 010 for searching for a device. After a user selects the control 010, the first apparatus presents a device list (for example, 002-1 or 002-2). The device list may include one or more devices that are currently connected to and have previously been connected to the first apparatus, such as a mobile phone 1, a mobile phone 2, a television, and an earphone.

Optionally, before the first apparatus displays the function interface 001, the first apparatus may display a menu interface. The first apparatus opens the function interface 001 in response to a select operation performed by the user on the menu interface. For example, the first apparatus opens the function interface 001 in response to a select operation performed by the user on a cloud space control on the menu interface. Alternatively, the first apparatus may open the function interface 001 in response to a voice instruction of the user. This is not limited in this application.

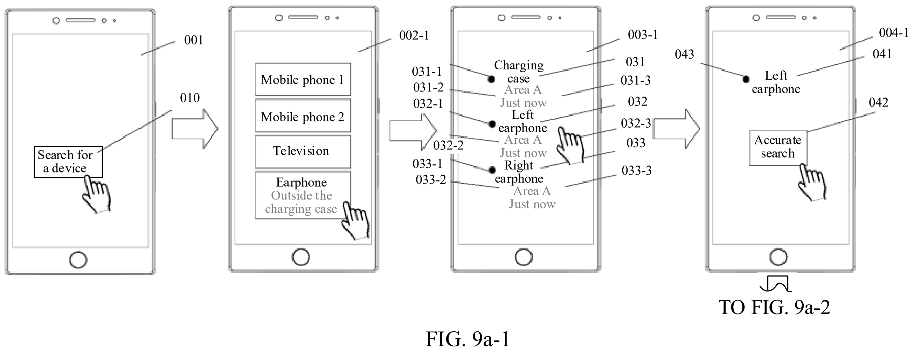

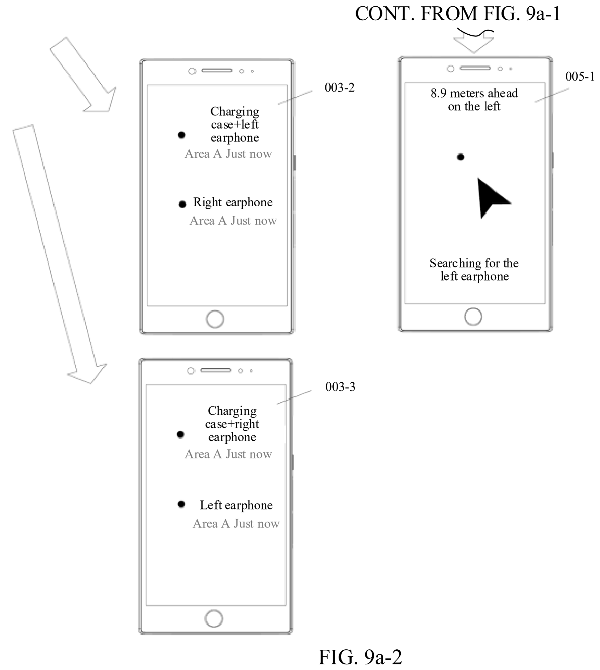

Refer to FIG. 9a-1 and FIG. 9a-2. The device list may further present a position status of a device in a multi-component product. For example, the device list 002-1 displays "earphone outside the charging case". The device list may further display position information of the device, and the position information may be determined during the most recent device searching. Optionally, the device list may further display search time of the position information of the device. In the device list 002-2 shown in FIG. 9b, the device is displayed to be in an area A, and the search time is "just now". Optionally, if the earphone is not accommodated in the charging case, the device list 002-1 in FIG. 9a-1 is presented; or if the earphone is accommodated in the charging case, the device list 002-2 in FIG. 9b is presented. Certainly, this is not limited in this application. For example, when the earphone is accommodated in the charging case, "earphone in the charging case" may be displayed in the device list 002-2 presented by the first apparatus.

Refer to FIG. 9a-1 and FIG. 9a-2. After the user selects an "earphone" control in the device list 002-1, the first apparatus may present a device details interface (for example, one of 003-1 to 003-3).

If both a left earphone and a right earphone are outside the charging case, the first apparatus presents the device details interface 003-1. The device details interface 003-1 displays a charging case control 031, a left earphone control 032, and a right earphone control 033. Optionally, a UI of each control (for example, a charging case control, a left earphone control, and a right earphone control) includes at least one of a battery level indicator of a corresponding apparatus (for example, a battery level indicator 031-1 of the charging case, a battery level indicator 032-1 of the left earphone, and a battery level indicator 033-1 of the right earphone), position information obtained through the most recent positioning of a corresponding apparatus (for example, position information 031-2 of the charging case, position information 032-2 of the left earphone, and position information 033-2 of the right earphone), and time of the most recent positioning of a corresponding apparatus (for example, positioning time 031-3 of the charging case, positioning time 032-3 of the left earphone, and positioning time 033-3 of the right earphone).

If the right earphone is outside the charging case, the first apparatus presents the device details interface 003-2. The device details interface 003-2 displays the charging case control and the right earphone control. A UI element of the charging case control may include "charging case+left earphone". Optionally, a UI of each control (for example, the charging case control and the right earphone control) includes at least one of a battery level of a corresponding apparatus, position information obtained through the most recent positioning, and time of the most recent positioning.

If the left earphone is outside the charging case, the first apparatus presents the details interface 003-3. The details interface 003-3 displays the charging case control and the left earphone control. The UI element of the charging case control may include "charging case+right earphone". Optionally, a UI of each control (for example, the charging case control and the left earphone control) includes at least one of a battery level, position information obtained through the most recent positioning, and time of the most recent positioning.

Further, the first apparatus positions an apparatus corresponding to a control in response to a select operation performed by the user on the control on the device details interface (for example, any one of 003-1 to 003-3). For example, the first apparatus positions the left earphone in response to a select operation performed by the user on the left earphone control on the device details interface 003-1.

Optionally, when the left earphone is positioned, the first apparatus may present a search details interface 004-1. The search details interface 004-1 displays a text 041 (for example, "left earphone") of a to-be-searched object and a search control 042 (or referred to as an accurate search control). Optionally, the search details interface 004-1 may further display a battery level indicator 043 of the to-be-searched object. The first apparatus opens a positioning interface 005-1 in response to a select operation performed by the user on the search control 042 on the search details interface 004-1. The positioning interface 005-1 displays a position cursor of the left earphone and a cursor (for example, an arrow) indicating a direction of the left earphone; a text indicating a direction and a distance between the left earphone and the first apparatus, for example, "8.9 meters ahead on the left"; and a text of the to-be-searched object, for example, "left earphone".

Refer to FIG. 9b. After the user selects an "earphone" control in the device list 002-2, the first apparatus may present a device details interface 003-4. The device details interface 003-4 displays the charging case control. The UI element of the charging case control may include "charging case+left earphone+right earphone". Optionally, the device details interface 003-4 may further display at least one of a battery level of the charging case, position information obtained through the most recent positioning, and time of the most recent positioning.

Further, the first apparatus positions the charging case in response to a select operation performed by the user on the charging case control on the device details interface 003-4.

Optionally, when the charging case is positioned, the first apparatus may present a search details interface 004-2. The search details interface 004-2 displays a text (for example, "charging case+left earphone+right earphone") of a to-be-searched object and a search control (or referred to as an accurate search control). The first apparatus opens a positioning interface 005-2 in response to a select operation performed by the user on the search control on the search details interface 004-2. The positioning interface 005-2 displays a position cursor of the charging case and a cursor (for example, an arrow) indicating a direction of the charging case; a text indicating a direction and a distance between the charging case and the first apparatus, for example, "8.9 meters ahead on the left"; and a text of the to-be-searched object, for example, "charging case+left earphone+right earphone".

It should be noted that, each interface in FIG. 9a-1, FIG. 9a-2, and FIG. 9b is an example, and an actual scenario may include more or fewer interaction processes. For example, the first apparatus may not present the search details interface (for example, 004-1 and 004-2), and the first apparatus may directly perform positioning in response to a select operation performed by the user on a control on the device details interface, and present the positioning interface (for example, 005-1 or 005-2).

In the positioning method provided in embodiments of this application, the first apparatus may display a third interface (for example, any one of the device details interfaces 003-1 to 003-4 in FIG. 9a-1, FIG. 9a-2, and FIG. 9b). In a first implementation, the second apparatus is not accommodated in the third apparatus, and the third apparatus accommodates the fourth apparatus. The third interface presents a first apparatus control (for example, the left earphone control on the device details interface 003-3 in FIG. 9a-2) and a second apparatus control (for example, the charging case control in the device details interface 003-3 in FIG. 9a-2). The first apparatus control corresponds to the second apparatus (for example, the left earphone), and the second apparatus control corresponds to the third apparatus that accommodates the fourth apparatus (for example, charging case+right earphone). Optionally, a UI element of the first apparatus control may include an element indicating a name of the second apparatus and an element indicating the battery level of the second apparatus, and a UI element of the second apparatus control may include an element indicating names of the third apparatus and the fourth apparatus and an element indicating the battery level of the third apparatus.

Further, the first apparatus may receive a select operation performed by the user on a target apparatus control. The target apparatus control may be the first apparatus control or the second apparatus control. The first apparatus positions an apparatus corresponding to the target apparatus control based on the detection information in response to a select operation performed by the user on the target apparatus control, to obtain position information. When the apparatus is positioned based on the detection information to obtain the position information, for a used positioning technology, refer to the foregoing examples. For brevity, details are not described again. If the target apparatus control is the first apparatus control, the obtained position information may include the position information of the second apparatus; or if the target apparatus control is the second apparatus control, the position information may include position information of the third apparatus and the fourth apparatus.

In a second implementation, the second apparatus is accommodated in the third apparatus, and the third apparatus further accommodates the fourth apparatus. The third interface presents a third apparatus control (the charging case control on the device details interface 003-4 in FIG. 9b). The third apparatus control corresponds to the third apparatus that accommodates the second apparatus and the fourth apparatus (for example, charging case+left earphone+right earphone). Optionally, a UI element of the third apparatus control may include an element indicating names of the second apparatus, the third apparatus, and the fourth apparatus, and an element indicating the battery level of the third apparatus.

Further, the first apparatus may receive a select operation performed by the user on the third apparatus control. The first apparatus positions the third apparatus based on the detection information in response to the select operation performed by the user on the third apparatus control, to obtain position information. The position information includes position information of the second apparatus, the third apparatus, and the fourth apparatus. When the apparatus is positioned based on the detection information to obtain the position information, for a used positioning technology, refer to the foregoing examples. For brevity, details are not described again.

The first apparatus may display a fourth interface (for example, the positioning interface 005-1 or 005-2). The fourth interface may present position information. The position information includes a distance and/or an angle between the apparatus corresponding to the target apparatus control and the first apparatus.

In some embodiments, the fourth apparatus does not need to be searched for. For example, when a component in a single-ear Bluetooth earphone product is searched for, the fourth apparatus is not included. Similar to the first implementation, the third interface may present the first apparatus control and the second apparatus control. A difference lies in that the second apparatus control corresponds to the third apparatus, and when the target apparatus control is the second apparatus control, the position information includes the position information of the third apparatus.

Similar to the second implementation, the third interface may present the third apparatus control. A difference lies in that the third apparatus control corresponds to the third apparatus that accommodates the second apparatus, and when the target apparatus control is the third apparatus control, the position information includes the position information of the second apparatus and the third apparatus.

Therefore, in embodiments of this application, the first apparatus interacts with the user through an interface to determine the to-be-searched object, and then accurately searches for the to-be-searched object, to improve user experience. Further, when the to-be-searched object is the second apparatus that can be accommodated in another apparatus, the second apparatus may be accurately searched for, to present a distance and/or an angle between the second apparatus and the first apparatus, so as to improve positioning accuracy.

In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

FIG. 10 is a schematic block diagram of a positioning apparatus 400 according to an embodiment of this application. As shown in FIG. 10, the apparatus 400 at least includes an obtaining module 410, a processing module 420, and a positioning module 430.

The obtaining module 410 may be configured to obtain a first query request, where the first query request is at least used for requesting to query position information of a second apparatus; the processing module 420 may be configured to determine apparatus information, where the apparatus information includes first position status information and first battery level information, the first position status information indicate whether the second apparatus is accommodated in a third apparatus, and the first battery level information indicates a battery level of the second apparatus and/or a battery level of the third apparatus, and the processing module 420 is further configured to determine a target apparatus based on the apparatus information, where the target apparatus is the second apparatus, the third apparatus, or another apparatus accommodated in the third apparatus; and the positioning module 430 is configured to position the target apparatus based on detection information, to obtain the position information of the second apparatus.

In some embodiments, the processing module 420 is specifically configured to: when the apparatus information satisfies a first condition, determine that the target apparatus is the third apparatus, where the first condition includes: the battery level of the third apparatus is greater than or equal to a first battery level threshold; and the second apparatus is accommodated in the third apparatus.

In some embodiments, the processing module 420 is specifically configured to: when the apparatus information satisfies a second condition, determine that the target apparatus is the second apparatus, where the second condition includes: the battery level of the second apparatus is greater than or equal to a second battery level threshold; and the second apparatus is not accommodated in the third apparatus; or the battery level of the second apparatus is greater than or equal to a second battery level threshold; the battery level of the third apparatus is less than a first battery level threshold; and the second apparatus is accommodated in the third apparatus.

In some embodiments, the apparatus information further includes second position status information and second battery level information, where the second position status information indicates whether a fourth apparatus is accommodated in the third apparatus, and the second battery level information indicates a battery level of the fourth apparatus. The processing module 420 is specifically configured to: when the apparatus information satisfies a third condition, determine that the target apparatus is the fourth apparatus, where the third condition includes: both the second apparatus and the fourth apparatus are accommodated in the third apparatus; the battery level of the second apparatus is less than a second battery level threshold; the battery level of the third apparatus is less than a first battery level threshold; and the battery level of the fourth apparatus is greater than or equal to a third battery level threshold.

In some embodiments, the position information of the second apparatus includes a distance and/or an angle between the second apparatus and the first apparatus.

In some embodiments, the positioning module 430 is specifically configured to: send the detection information to the target apparatus to position the target apparatus, to obtain the position information of the second apparatus; or receive the detection information sent by the target apparatus to position the target apparatus, to obtain the position information of the second apparatus.

In some embodiments, the positioning module 430 is specifically configured to: receive time synchronization information sent by the target apparatus; determine a time offset between the first apparatus and the target apparatus based on the time synchronization information; and determine the position information of the second apparatus based on the time offset and the detection information.

In some embodiments, a display module is further included, and configured to display a first interface, where the first interface presents the target apparatus and position status information between the second apparatus and the third apparatus.

In some embodiments, the processing module 420 is specifically configured to: when the apparatus information satisfies a fourth condition, determine that the target apparatus is the third apparatus, and control the second apparatus to perform energy supplement on the third apparatus, where the fourth condition includes: the battery level of the second apparatus is greater than or equal to a fourth battery level threshold; the battery level of the third apparatus is less than a first battery level threshold; and the second apparatus is accommodated in the third apparatus.

In some embodiments, the display module is further included, and configured to display a second interface, where the second interface presents the position information of the second apparatus.

It should be understood that a specific process in which the modules perform the foregoing corresponding steps is described in detail in the foregoing method embodiments. For brevity, details are not described herein.

It should be understood that division into the modules of the foregoing apparatus is merely logical function division. During actual implementation, all or some of the units may be integrated into one physical entity may be physically separated.

FIG. 11 is a schematic block diagram of a positioning apparatus 500 according to an embodiment of this application. As shown in FIG. 11, the apparatus 500 at least includes a display module 510, an obtaining module 520, and a positioning module 530.

The display module 510 may be configured to display a third interface, where the third interface presents a first apparatus control and a second apparatus control, or the third interface presents a third apparatus control, where the first apparatus control corresponds to a second apparatus, the second apparatus control corresponds to a third apparatus that does not accommodate the second apparatus, and the third apparatus control corresponds to the third apparatus that accommodates the second apparatus. The obtaining module 520 is configured to receive a select operation performed by a user on a target apparatus control, where the target apparatus control is the first apparatus control, the second apparatus control, or the third apparatus control. The positioning module 530 is configured to position, based on detection information, an apparatus corresponding to the target apparatus control, to obtain position information. The display module 510 is further configured to display a fourth interface, where the fourth interface presents the position information, where when the target apparatus control is the first apparatus control, the position information includes position information of the second apparatus; or when the target apparatus control is the third apparatus control, the position information includes position information of the second apparatus and the third apparatus.

In some embodiments, the third interface presents the first apparatus control and the second apparatus control, and the second apparatus control corresponds to the third apparatus that accommodates the fourth apparatus; or the third interface presents the third apparatus control, and the third apparatus control corresponds to the third apparatus that accommodates the second apparatus and the fourth apparatus. When the target apparatus control is the second apparatus control, the position information includes position information of the third apparatus and the fourth apparatus; or when the target apparatus control is the third apparatus control, the position information includes position information of the second apparatus, the third apparatus, and the fourth apparatus. The first apparatus positions the third apparatus, and may obtain position information of the third apparatus and an apparatus (for example, the second apparatus and/or the fourth apparatus) accommodated in the third apparatus. This may be applied to positioning of a multi-component product.

In some embodiments, the positioning module 530 is specifically configured to: send the detection information to the apparatus corresponding to the target apparatus control to position the apparatus, to obtain the position information; or receive the detection information sent by the apparatus corresponding to the target apparatus control to position the apparatus, to obtain the position information.

In some embodiments, the positioning module 530 is specifically configured to: receive time synchronization information sent by the apparatus corresponding to the target apparatus control; determine, based on the time synchronization information, a time offset between the first apparatus and the apparatus corresponding to the target apparatus control; and determine the position information based on the time offset and the detection information.

In some embodiments, the position information includes a distance and/or an angle between the apparatus corresponding to the target apparatus control and the first apparatus.

It should be understood that a specific process in which the modules perform the foregoing corresponding steps is described in detail in the foregoing method embodiments. For brevity, details are not described herein.

It should be understood that division into the modules of the foregoing apparatus is merely logical function division. During actual implementation, all or some of the units may be integrated into one physical entity may be physically separated.

FIG. 12 is a schematic block diagram of a positioning apparatus 600 according to an embodiment of this application. As shown in FIG. 12, the apparatus 600 at least includes a transceiver module 610 and a processing module 620.

The transceiver module 610 may be configured to send detection information to a first apparatus in response to a positioning instruction sent by the first apparatus.

Alternatively,
the processing module 620 is configured to determine, based on apparatus information, that a target apparatus is a second apparatus, where the apparatus information includes first position status information and first battery level information, the first position status information indicates whether the second apparatus is accommodated in a third apparatus, and the first battery level information indicates a battery level of the second apparatus and/or a battery level of the third apparatus. The transceiver module 610 may be configured to send detection information to a first apparatus, where the detection information is used for determining position information of the second apparatus.

In some embodiments, the processing module 620 is specifically configured to: when the apparatus information satisfies a second condition, determine that the target apparatus is the second apparatus, where the second condition includes:
the battery level of the second apparatus is greater than or equal to a second battery level threshold; and
the second apparatus is not accommodated in the third apparatus;
   or
the battery level of the second apparatus is greater than or equal to a second battery level threshold;
the battery level of the third apparatus is less than a first battery level threshold; and
the second apparatus is accommodated in the third apparatus.

In some embodiments, the transceiver module 610 is further configured to: send time synchronization information to the first apparatus, where the time synchronization information is used for determining the position information of the second apparatus with reference to the detection information.

In embodiments of this application, the positioning apparatus (for example, any one of the positioning apparatuses 400 to 600) may be implemented as an electronic device, or may be deployed in the electronic device, for example, the electronic device 100 in FIG. 1.

An embodiment of this application further provides a positioning system. The system may include the first apparatus, the second apparatus, and the third apparatus that can accommodate the second apparatus in the foregoing embodiments.

In an embodiment, the system further includes a fourth apparatus, where the fourth apparatus is an apparatus that can be accommodated in the third apparatus.

An embodiment of this application further provides a computer-readable storage medium. The computer-readable storage medium stores a computer program or instructions, and when the computer program or the instructions are run, the method in the foregoing embodiments is implemented.

An embodiment of this application further provides a computer program product, including computer program instructions. The computer program instructions enable a computer to perform the method in the foregoing embodiments.

The term "a plurality of" in this specification refers to two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between associated objects, and a character "/" in a formula usually indicates a "divisible" relationship between associated objects. In addition, it should be understood that in description of this application, the terms such as "first" and "second" are merely used for distinguishing and description, but should not be understood as indicating or implying relative importance, or should not be understood as indicating or implying a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

## Claims

1. A positioning method, applied to a first apparatus, wherein the method comprises:
obtaining a first query request, wherein the first query request is at least used for requesting to query position information of a second apparatus;
determining apparatus information, wherein the apparatus information comprises first position status information and first battery level information, the first position status information indicates whether the second apparatus is accommodated in a third apparatus, and the first battery level information indicates a battery level of the second apparatus and/or a battery level of the third apparatus;
determining a target apparatus based on the apparatus information, wherein the target apparatus is the second apparatus, the third apparatus, or another apparatus accommodated in the third apparatus; and
positioning the target apparatus based on detection information, to obtain the position information of the second apparatus.

2. The method according to claim 1, wherein determining the target apparatus based on the apparatus information comprises:
when the apparatus information satisfies a first condition, determining that the target apparatus is the third apparatus, wherein the first condition comprises:
the battery level of the third apparatus is greater than or equal to a first battery level threshold; and
the second apparatus is accommodated in the third apparatus.

3. The method according to claim 1, wherein determining the target apparatus based on the apparatus information comprises:
when the apparatus information satisfies a second condition, determining that the target apparatus is the second apparatus, wherein the second condition comprises:
the battery level of the second apparatus is greater than or equal to a second battery level threshold; and
the second apparatus is not accommodated in the third apparatus; or
the battery level of the second apparatus is greater than or equal to a second battery level threshold;
the battery level of the third apparatus is less than a first battery level threshold; and
the second apparatus is accommodated in the third apparatus.

4. The method according to claim 1, wherein the apparatus information further comprises second position status information and second battery level information, the second position status information indicates whether a fourth apparatus is accommodated in the third apparatus, and the second battery level information indicates a battery level of the fourth apparatus; and
determining the target apparatus based on the apparatus information comprises:
when the apparatus information satisfies a third condition, determining that the target apparatus is the fourth apparatus, wherein the third condition comprises:
both the second apparatus and the fourth apparatus are accommodated in the third apparatus;
the battery level of the second apparatus is less than a second battery level threshold;
the battery level of the third apparatus is less than a first battery level threshold; and
the battery level of the fourth apparatus is greater than or equal to a third battery level threshold.

5. The method according to any one of claims 1 to 4, wherein the position information of the second apparatus comprises a distance and/or an angle between the second apparatus and the first apparatus.

6. The method according to any one of claims 1 to 5, wherein positioning the target apparatus based on the detection information, to obtain the position information of the second apparatus comprises:
sending the detection information to the target apparatus to position the target apparatus, to obtain the position information of the second apparatus; or
receiving the detection information sent by the target apparatus to position the target apparatus, to obtain the position information of the second apparatus.

7. The method according to any one of claims 1 to 6, wherein positioning the target apparatus based on the detection information, to obtain the position information of the second apparatus comprises:
receiving time synchronization information sent by the target apparatus;
determining a time offset between the first apparatus and the target apparatus based on the time synchronization information; and
determining the position information of the second apparatus based on the time offset and the detection information.

8. The method according to any one of claims 1 to 7, further comprising:
displaying a first interface, wherein the first interface presents the target apparatus and position status information between the second apparatus and the third apparatus.

9. The method according to any one of claims 1 to 8, wherein determining the target apparatus based on the apparatus information comprises:
when the apparatus information satisfies a fourth condition, determining that the target apparatus is the third apparatus, and controlling the second apparatus to perform energy supplement on the third apparatus, wherein the fourth condition comprises:
the battery level of the second apparatus is greater than or equal to a fourth battery level threshold;
the battery level of the third apparatus is less than a first battery level threshold; and
the second apparatus is accommodated in the third apparatus.

10. The method according to any one of claims 1 to 9, further comprising:
displaying a second interface, wherein the second interface presents the position information of the second apparatus.

11. A positioning method, applied to a first apparatus, wherein the method comprises:
displaying a third interface, wherein the third interface presents a first apparatus control and a second apparatus control, or the third interface presents a third apparatus control, the first apparatus control corresponds to a second apparatus, the second apparatus control corresponds to a third apparatus that does not accommodate the second apparatus, and the third apparatus control corresponds to the third apparatus that accommodates the second apparatus;
receiving a select operation performed by a user on a target apparatus control, wherein the target apparatus control is the first apparatus control, the second apparatus control, or the third apparatus control;
positioning, based on detection information, an apparatus corresponding to the target apparatus control, to obtain position information; and
displaying a fourth interface, wherein the fourth interface presents the position information, wherein
when the target apparatus control is the first apparatus control, the position information comprises position information of the second apparatus; or
when the target apparatus control is the third apparatus control, the position information comprises position information of the second apparatus and the third apparatus.

12. The method according to claim 11, wherein
the third interface presents the first apparatus control and the second apparatus control, and the second apparatus control corresponds to the third apparatus that accommodates a fourth apparatus; or
the third interface presents the third apparatus control, and the third apparatus control corresponds to the third apparatus that accommodates the second apparatus and a fourth apparatus, wherein
when the target apparatus control is the second apparatus control, the position information comprises position information of the third apparatus and the fourth apparatus; or
when the target apparatus control is the third apparatus control, the position information comprises position information of the second apparatus, the third apparatus, and the fourth apparatus.

13. The method according to claim 11 or 12, wherein positioning, based on the detection information, the apparatus corresponding to the target apparatus control, to obtain the position information comprises:
sending the detection information to the apparatus corresponding to the target apparatus control to position the apparatus, to obtain the position information; or
receiving the detection information sent by the apparatus corresponding to the target apparatus control to position the apparatus, to obtain the position information.

14. The method according to any one of claims 11 to 13, wherein positioning, based on the detection information, the apparatus corresponding to the target apparatus control, to obtain the position information comprises:
receiving time synchronization information sent by the apparatus corresponding to the target apparatus control;
determining, based on the time synchronization information, a time offset between the first apparatus and the apparatus corresponding to the target apparatus control; and
determining the position information based on the time offset and the detection information.

15. The method according to any one of claims 11 to 14, wherein the position information comprises a distance and/or an angle between the apparatus corresponding to the target apparatus control and the first apparatus.

16. A positioning method, applied to a second apparatus, wherein the second apparatus is an apparatus that can be accommodated in a third apparatus, and the method comprises:
sending detection information to a first apparatus in response to a positioning instruction sent by the first apparatus;
or
determining, based on apparatus information, that a target apparatus is the second apparatus, wherein the apparatus information comprises first position status information and first battery level information, the first position status information indicates whether the second apparatus is accommodated in the third apparatus, and the first battery level information indicates a battery level of the second apparatus and/or a battery level of the third apparatus; and
sending detection information to a first apparatus, wherein
the detection information is used for determining position information of the second apparatus.

17. A positioning apparatus, comprising a processor and a memory, wherein the memory is configured to store a computer program, and the processor is configured to invoke and run the computer program stored in the memory, to enable the positioning apparatus to perform the method according to any one of claims 1 to 16.

18. A positioning system, comprising a first apparatus, a second apparatus, and a third apparatus that can accommodate the second apparatus, wherein
the first apparatus is configured to:
obtain a first query request, wherein the first query request is at least used for requesting to query position information of the second apparatus;
determine apparatus information, wherein the apparatus information comprises first position status information and first battery level information, the first position status information indicates whether the second apparatus is accommodated in the third apparatus, and the first battery level information indicates a battery level of the second apparatus and/or a battery level of the third apparatus;
determine a target apparatus based on the apparatus information, wherein the target apparatus is the second apparatus, the third apparatus, or another apparatus accommodated in the third apparatus; and
position the target apparatus based on detection information, to obtain the position information of the second apparatus.

19. The system according to claim 18, further comprising a fourth apparatus, wherein the apparatus information further comprises second position status information and second battery level information, the second position status information indicates whether the fourth apparatus is accommodated in the third apparatus, and the second battery level information indicates a battery level of the fourth apparatus.

20. A computer-readable storage medium, wherein the computer-readable storage medium stores a computer program or instructions, and when the computer program or the instructions are run, the method according to any one of claims 1 to 16 is implemented.

21. A computer program product, comprising a computer program or instructions, wherein when the computer program or the instructions are executed by a processor, the method according to any one of claims 1 to 16 is implemented.
